# EUROPEAN PATENT APPLICATION

(11) **EP 4 600 086 A1**
(43) Date of publication of application: **13.08.2025**
(21) Application number: 23874902.2
(22) Date of filing: 04.10.2023
(51) Int. Cl.: B60N 2/56, A47C 7/74

(54) **SEAT FOR SADDLE RIDING-TYPE VEHICLE**

(30) Priority: 07.10.2022 US 202263378751 P
(71) Applicant: TS Tech Co., Ltd., Asaka-shi, Saitama 351-0012 (JP)
(72) Inventor: HONMA Yuichi, Shioya-gun, Tochigi 329-1217 (JP); MOTODA Shinichiro, Shioya-gun, Tochigi 329-1217 (JP); YAGUCHI Yuta, Shioya-gun, Tochigi 329-1217 (JP); HOSHI Yuichiro, Shioya-gun, Tochigi 329-1217 (JP); KUMA Tomokazu, Shioya-gun, Tochigi 329-1217 (JP)
(74) Representative: Dehns
(86) International application number: PCT/JP2023/036208
(87) International publication number: WO 2024/075776

(57) **Abstract**

[TASK] To provide a seat for a saddle-ride type vehicle in which a temperature sensing element is disposed in the vicinity of a heater wire and the temperature sensing element is less likely to receive a load from an occupant.

[SOLUTION] A seat for a saddle-ride type vehicle includes a bottom plate 31 extending in a front-rear direction, a pad 32 placed on the bottom plate 31 and extending in the front-rear direction, a skin material 34 covering the pad 32, and a heater 20 provided on an upper portion of the pad 32, wherein the heater 20 includes a base fabric 61 extending in the front-rear direction on the upper portion of the pad 32, a heater wire 62 provided on the base fabric 61, and a temperature sensing element 20C provided on a front portion of the base fabric 61, and the temperature sensing element 20C is disposed in a front portion of the pad 32.

## Description

### TECHNICAL FIELD

The present invention relates to a seat for a saddle-ride type vehicle.

### BACKGROUND ART

On a saddle-ride type vehicle, such as a motorcycle, an automatic three-wheeler, a snowmobile, a personal watercraft, or the like, a seat designed to be seated astride by an occupant is mounted. Some of such seats may have a heater installed therein (for example, see Patent Document 1).

In the control of the heater provided in the seat, namely, in the control of energization of the heater wire configuring the heater, a temperature sensing element such as a thermistor may be used. The temperature sensing element is an element whose characteristics change depending on the temperature.

### PRIOR ART DOCUMENT(S)

### PATENT DOCUMENT(S)

Patent Document 1: JP2019-175857A

### SUMMARY OF THE INVENTION

### TASK TO BE ACCOMPLISHED BY THE INVENTION

In Patent Document 1, the temperature sensing element is disposed to be spaced from the heater wire. In this case, there is a problem that the accuracy of detection of the temperature around the heater wire by the temperature sensing element may be lowered. However, in a case where the thermosensitive element is disposed in the vicinity of the heater wire, it becomes easy for the temperature sensing element to receive a load from the occupant. In this case, there is a problem that the temperature sensing element may be damaged, or the occupant may receive an uncomfortable feeling from the temperature sensing element.

In view of the foregoing background, an object of the present invention is to provide a seat for a saddle-ride type vehicle in which a temperature sensing element is disposed in the vicinity of a heater wire and the temperature sensing element is less likely to receive a load from an occupant.

### MEANS TO ACCOMPLISH THE TASK

To achieve the above object, one aspect of the present invention provides a seat (1) for a saddle-ride type vehicle, the seat comprising: a bottom plate (31) extending in a front-rear direction of the saddle-ride type vehicle; a pad (32) placed on the bottom plate and extending in the front-rear direction; a skin material (34) covering the pad; and a heater (20) provided on an upper portion of the pad, wherein the heater comprises a base fabric (61) extending in the front-rear direction on the upper portion of the pad, a heater wire (62) provided on the base fabric, and a temperature sensing element (20C) provided on a front portion of the base fabric, and the temperature sensing element is disposed in a front portion (32C) of the pad.

According to this aspect, in the seat for a saddle-ride type vehicle, it is possible to dispose the temperature sensing element in the vicinity of the heater wire and to make it less likely for the temperature sensing element to receive a load from the occupant. Since the occupant tends to be seated on the rear portion of the pad which extends in the front-rear direction, the temperature sensing element disposed in the front portion of the pad is positioned in front of the buttocks and the crotch of the occupant. Therefore, the temperature sensing element is less likely to receive a load from the occupant. Also, since the temperature sensing element is provided on the base fabric together with the heater wire, the temperature sensing element can be disposed close to the heater wire.

In the above aspect, the front portion of the pad may be provided with a recess (22), and the temperature sensing element is received in the recess.

According to this aspect, since the temperature sensing element is received in the recess, the temperature sensing element is even less likely to receive a load from the occupant.

In the above aspect, the base fabric may be provided with a wiring (65) connected to the heater wire and the temperature sensing element via a joining part (20D), the joining part may be disposed adjacent to the temperature sensing element, and the temperature sensing element and the joining part may be received in the recess.

According to this aspect, similarly to the temperature sensing element, the joining part is less likely to receive a load from the occupant.

In the above aspect, the heater may comprise a first heat generating region (101) positioned on a rear portion of the pad and a second heat generating region (102) disposed in front of the first heat generating region, and a density of the heater wire in the second heat generating region may be lower than a density of the heater wire in the first heat generating region.

According to this aspect, the rear portion of the pad where the buttocks of the occupant contact can be efficiently heated.

In the above aspect, the second heat generating region may have two parts disposed to be laterally spaced from each other.

According to this aspect, the second heat generating region can efficiently warm the left and right thighs of the occupant.

In the above aspect, the pad may have an upper surface (32E, 32G) and left and right side surfaces (32H), and the heater may have a first heater part (121) disposed on the upper surface and second heater parts (122) respectively disposed on the side surfaces.

According to this aspect, the second heater parts can efficiently warm the left and right thighs of the occupant.

In the above aspect, the base fabric may include a first base fabric part (125) configuring the first heater part, second base fabric parts (126) configuring the second heater parts, and base fabric connection parts (127) connecting the first base fabric part and the second base fabric parts, the heater wire may include a first heater wire part (128) provided on the first base fabric part, second heater wire parts (129) provided on the second base fabric parts, and heater connection parts (130) provided on the base fabric connection parts and connecting the first heater wire part and the second heater wire parts, and a wire length of each heater connection part on the base fabric connection part may be longer than a length of each base fabric connection part between the first heater part and the second heater part.

According to this aspect, when the pad receives a load from the occupant and undergoes deformation, the heater connection parts can follow the deformation of the pad.

In the above aspect, the upper portion of the pad may be formed with a first recess (32J) and a second recess (32K) that is recessed downward from a bottom portion of the first recess, the heater may be provided in the second recess, and a plate-shaped member (21) having flexibility may be provided in the first recess.

According to this aspect, since the temperature sensing element is protected by the plate-shaped member, the temperature sensing element is even less likely to receive a load from the occupant.

In the above aspect, a controller (35) connected to the heater wire and the temperature sensing element via a harness (66) may be provided on a reverse side of the bottom plate.

According to this aspect, the seat for a saddle-ride type vehicle can be supplied as an assembly.

In the above aspect, the pad and the bottom plate may each be provided with a through hole (91, 92) for passing the harness electrically connected to the temperature sensing element and the heater wire, and the controller may be electrically connected to the harness passed through the through holes.

According to this aspect, the harness can be shortened.

### EFFECT OF THE INVENTION

To achieve the above object, one aspect of the present invention provides a seat (1) for a saddle-ride type vehicle, the seat comprising: a bottom plate (31) extending in a front-rear direction of the saddle-ride type vehicle; a pad (32) placed on the bottom plate and extending in the front-rear direction; a skin material (34) covering the pad; and a heater (20) provided on an upper portion of the pad, wherein the heater comprises a base fabric (61) extending in the front-rear direction on the upper portion of the pad, a heater wire (62) provided on the base fabric, and a temperature sensing element (20C) provided on a front portion of the base fabric, and the temperature sensing element is disposed in a front portion (32C) of the pad.

According to this aspect, in the seat for a saddle-ride type vehicle, it is possible to dispose the temperature sensing element in the vicinity of the heater wire and to make it less likely for the temperature sensing element to receive a load from the occupant. Since the occupant tends to be seated on the rear portion of the pad which extends in the front-rear direction, the temperature sensing element disposed in the front portion of the pad is positioned in front of the buttocks and the crotch of the occupant. Therefore, the temperature sensing element is less likely to receive a load from the occupant. Also, since the temperature sensing element is provided on the base fabric together with the heater wire, the temperature sensing element can be disposed close to the heater wire.

In the above aspect, the front portion of the pad may be provided with a recess (22), and the temperature sensing element is received in the recess.

According to this aspect, since the temperature sensing element is received in the recess, the temperature sensing element is even less likely to receive a load from the occupant.

In the above aspect, the base fabric may be provided with a wiring (65) connected to the heater wire and the temperature sensing element via a joining part (20D), the joining part may be disposed adjacent to the temperature sensing element, and the temperature sensing element and the joining part may be received in the recess.

According to this aspect, similarly to the temperature sensing element, the joining part is less likely to receive a load from the occupant.

In the above aspect, the heater may comprise a first heat generating region (101) positioned in a rear portion of the pad and a second heat generating region (102) disposed in front of the first heat generating region, and a density of the heater wire in the second heat generating region may be lower than a density of the heater wire in the first heat generating region.

According to this aspect, the rear portion of the pad where the buttocks of the occupant contact can be efficiently heated.

In the above aspect, the second heat generating region may have two parts disposed to be laterally spaced from each other.

According to this aspect, the second heat generating region can efficiently warm the left and right thighs of the occupant.

In the above aspect, the pad may have an upper surface (32E, 32G) and left and right side surfaces (32H), and the heater may have a first heater part (121) disposed on the upper surface and second heater parts (122) respectively disposed on the side surfaces.

According to this aspect, the second heater parts can efficiently warm the left and right thighs of the occupant.

In the above aspect, the base fabric may include a first base fabric part (125) configuring the first heater part, second base fabric parts (126) configuring the second heater parts, and base fabric connection parts (127) connecting the first base fabric part and the second base fabric parts, the heater wire may include a first heater wire part (128) provided on the first base fabric part, second heater wire parts (129) provided on the second base fabric parts, and heater connection parts (130) provided on the base fabric connection parts and connecting the first heater wire part and the second heater wire parts, and a wire length of each heater connection part on the base fabric connection part may be longer than a length of each base fabric connection part between the first heater part and the second heater part.

According to this aspect, when the pad receives a load from the occupant and undergoes deformation, the heater connection parts can follow the deformation of the pad.

In the above aspect, the upper portion of the pad may be formed with a first recess (32J) and a second recess (32K) that is recessed downward from a bottom portion of the first recess, the heater may be provided in the second recess, and a plate-shaped member (21) having flexibility may be provided in the first recess.

According to this aspect, since the temperature sensing element is protected by the plate-shaped member, the temperature sensing element is even less likely to receive a load from the occupant.

In the above aspect, a controller (35) connected to the heater wire and the temperature sensing element via a harness (66) may be provided on a reverse side of the bottom plate.

According to this aspect, the seat for a saddle-ride type vehicle can be supplied as an assembly.

In the above aspect, the pad and the bottom plate may each be provided with a through hole (91, 92) for passing the harness electrically connected to the temperature sensing element and the heater wire, and the controller may be electrically connected to the harness passed through the through holes.

According to this aspect, the harness can be shortened.

### BRIEF DESCRIPTION OF THE DRAWINGS

[Figure 1] A perspective view showing a seat according to the first embodiment
[Figure 2] A plan view of the seat
[Figure 3] An exploded perspective view of a front seat
[Figure 4] An explanatory diagram showing an example of a mounting structure for a controller
[Figure 5] An explanatory diagram showing an example of a mounting structure for a controller
[Figure 6] A plan view of a heater
[Figure 7] An explanatory diagram of an exemplary circuit of the heater
[Figure 8] A sectional view taken along line VIII-VIII in Figure 1
[Figure 9] A sectional view taken along line IX-IX in Figure 1
[Figure 10] An explanatory diagram showing a distribution of a heater wire of a heater according to a modification
[Figure 11] An explanatory diagram showing a distribution of a heater wire of a heater according to a modification
[Figure 12] A perspective view showing a seat according to the second embodiment

### MODE(S) FOR CARRYING OUT THE INVENTION

In the following, embodiments for carrying out the present invention will be described with reference to the drawings. Note that the embodiments described below including modifications are mere examples and the technical scope of the present invention is not limited to them. The technical scope of the present invention covers various modifications.

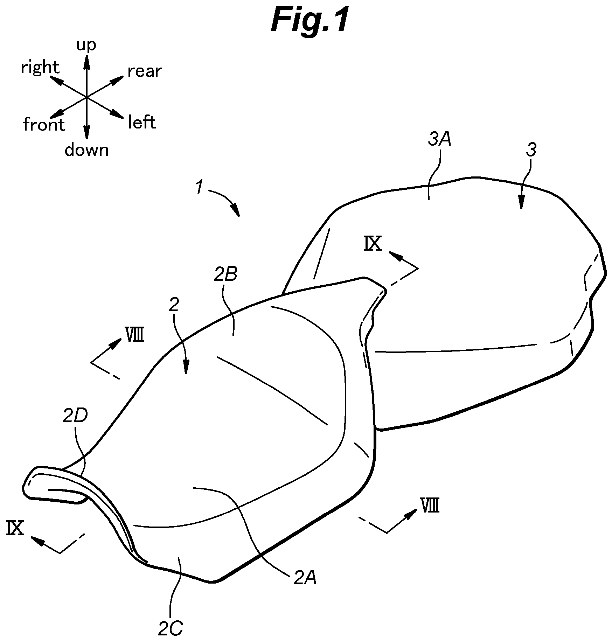

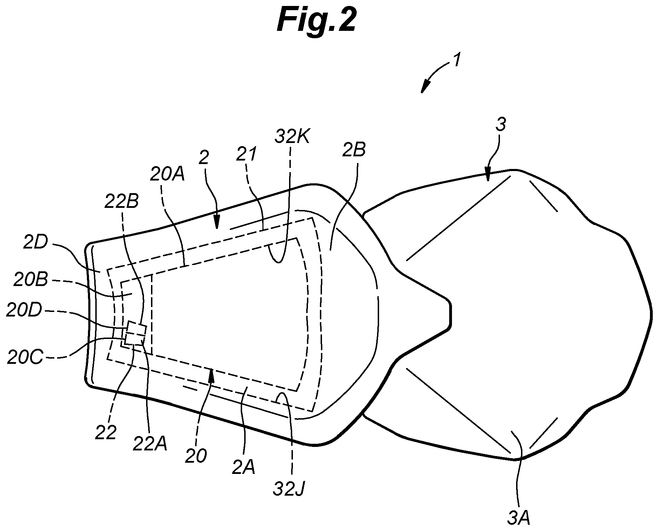

Figure 1 is a perspective view showing a seat 1 for a saddle-ride type vehicle according to the first embodiment. Figure 2 is a plan view of the seat 1. The front, rear, right, left, up, and down directions are based on a saddle-ride type vehicle in which the seat 1 is installed. The seat 1 is used in a saddle-ride type vehicle such as a motorcycle, an automatic three-wheeler, a snowmobile, a personal watercraft, etc. In the present embodiment, the seat 1 is a seat for a motorcycle. As shown in Figures 1 and 2, the seat 1 has a front seat 2 and a rear seat 3. The front seat 2 and the rear seat 3 are manufactured separately from each other and are separable. The driver is to be seated on the front seat 2.

The front seat 2 extends in the front-rear direction. The front seat 2 includes a seating part 2A extending in the front-rear direction, a rear wall portion 2B extending upward and rearward from the rear portion of the seating part 2A, left and right side wall portions 2C extending downward from left and right side portions of the seating part 2A, and a front wall portion 2D extending upward and forward from the front portion of the seating part 2A.

The seating part 2A has an upper surface that faces upward. In plan view, the lateral width of the seating part 2A increases toward the rear. The upper surface of the seating part 2A supports the buttocks of the occupant from below. The rear wall portion 2B supports the buttocks of the occupant from the rear.

As seen in the lateral direction, the seating part 2A, the front wall portion 2D, and the rear wall portion 2B jointly form a U shape. Preferably, the front wall portion 2D is disposed along the rear end of the fuel tank of the motorcycle.

The rear seat 3 extends in the front-rear direction. The rear seat 3 includes a seating part 3A extending in the front-rear direction. The seating part 3A has an upper surface that faces upward. In plan view, the lateral width of the seating part 3A increases toward the rear, and after reaching the maximum width, the lateral width decreases toward the rear.

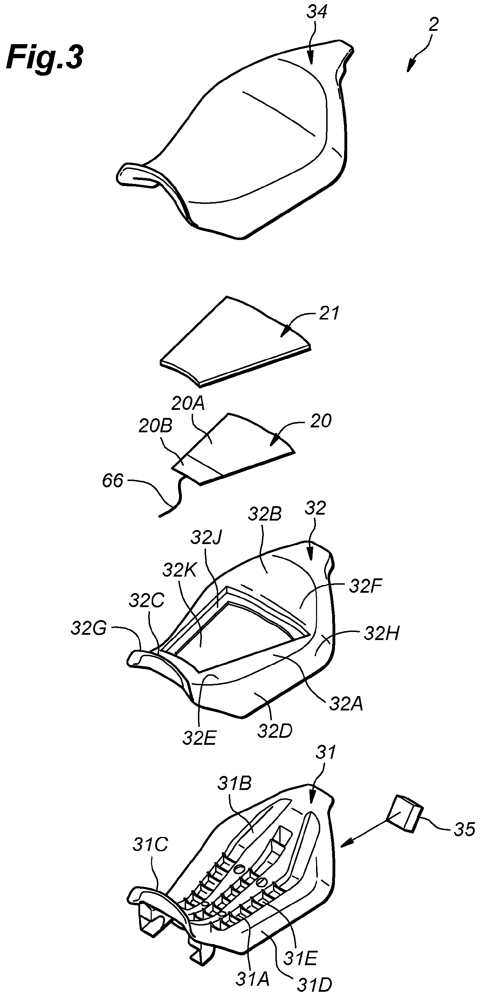

Figure 3 is an exploded view of the front seat 2. As shown in Figure 3, the front seat 2 includes a bottom plate 31, a pad 32, a heater 20, a plate-shaped member 21, a skin material 34, and a controller 35.

The bottom plate 31 is a support member made of resin, for example. The bottom plate 31 extends in the front-rear direction. The bottom plate 31 includes a plate main body 31A in a plate shape and having surface facing upward and downward, a plate rear portion 31B extending upward and rearward from the rear end of the plate main body 31A, a plate front portion 31C extending upward and forward from the front end of the plate main body 31A, and edge wall portions 31D extending in the front-rear direction along left and right side edges of the plate main body 31A and the plate rear portion 31B. The left and right edge wall portions 31D extend downward and laterally outward. The lower surface of the plate main body 31A is provided with hooks for engagement with the body of the motorcycle.

The plate main body 31A, the plate rear portion 31B, and the plate front portion 31C are formed with multiple reinforcement structures 31E. The reinforcement structure 31E includes multiple reinforcement ribs extending in the front-rear direction and the left-right direction. In plan view, the lateral width of the plate main body 31A increases toward the rear. In plan view, the lateral width of the plate rear portion 31B decreases toward the rear. In plan view, the lateral width of the plate front portion 31C decreases toward the front.

The pad 32 is formed of a member having flexibility, for example, urethane foam. The pad 32 extends in the front-rear direction and is placed on the bottom plate 31. The pad 32 includes a pad main body 32A having an upper surface 32E extending in the front-rear direction, a pad rear wall portion 32B having an upper surface 32F extending rearward and upward from the rear end of the pad main body 32A, a pad front wall portion 32C having an upper surface 32G extending forward and upward from the front end of the pad main body 32A, and left and right pad edge wall portions 32D having side surfaces 32H extending laterally outward and downward from the left and right end portions of the pad main body 32A and the pad rear wall portion 32B. In plan view, the lateral width of the pad main body 32A increases toward the rear. In plan view, the lateral width of the pad rear wall portion 32B decreases toward the rear. In plan view, the lateral width of the pad front wall portion 32C decreases toward the front.

A front portion of the pad 32 includes a front half of the pad main body 32A and the pad front wall portion 32C. A rear portion of the pad 32 includes a rear half of the pad main body 32A and the pad rear wall portion 32B. The upper surface 32E of the pad main body 32A faces upward. The upper surface 32F of the pad rear wall portion 32B faces upward and forward. The upper surface 32G of the pad front wall portion 32C faces upward and rearward. The upper surface 32E of the pad main body 32A and the upper surface 32G of the pad front wall portion 32C are connected to each other. The side surfaces 32H of the left and right pad edge wall portions 32D face laterally outward.

The upper surface 32E of the pad 32 is formed a first recess 32J. The first recess 32J is recessed downward from the upper surface 32E and extends in the front-rear direction. Preferably, a front portion of the first recess 32J extends into the upper surface 32G. Namely, the front portion of the first recess 32J is preferably formed in the upper surface 32G. The front portion of the first recess 32J preferably extends forward and upward along the upper surface 32G. The lateral width of the first recess 32J increases toward the rear.

A bottom portion of the first recess 32J is formed with a second recess 32K that is recessed downward. The second recess 32K extends in the front-rear direction. Preferably, a front portion of the second recess 32K extends into the pad front wall portion 32C. Namely, the front portion of the second recess 32K is preferably formed in the upper surface 32G. The front portion of the second recess 32K preferably extends forward and upward along the first recess 32J. The lateral width of the second recess 32K increases toward the rear. In plan view, the second recess 32K is disposed inside the first recess 32J. The depth of the second recess 32K is smaller than the depth of the first recess 32J.

The heater 20 is provided in the second recess 32K, and the plate-shaped member 21 is provided in the first recess 32J. The plate-shaped member 21 has flexibility. The plate-shaped member 21 is preferably made of the same material as the pad 32. Preferably, the plate-shaped member 21 is fitted in the first recess 32J. The upper surface of the plate-shaped member 21 preferably forms a continuous surface in cooperation with the upper surface 32E and the upper surface 32G.

The skin material 34 is formed of a flexible sheet material. Preferably, the skin material 34 is formed of a resin material, such as artificial leather, for example. The skin material 34 is placed to cover the bottom plate 31, the pad 32, and the plate-shaped member 21. The skin material 34 covers edge parts of the pad 32 and the bottom plate 31. The edge part of the skin material 34 is preferably locked to the lower surface of the bottom plate 31.

The controller 35 is an electronic control unit (ECU) that controls the heater 20. The controller 35 is a computing device including a microprocessor (MPU), a non-volatile memory, a volatile memory, and an interface. By executing the programs stored in the non-volatile memory with the microprocessor, the controller 35 realizes various applications. Also, electric power is supplied to the controller 35 from a power supply of the motorcycle via a harness not shown in the drawings. The controller 35 is provided on the reverse side of the bottom plate 31. The controller 35 is preferably supported on the reverse side of the plate rear portion 31B, for example.

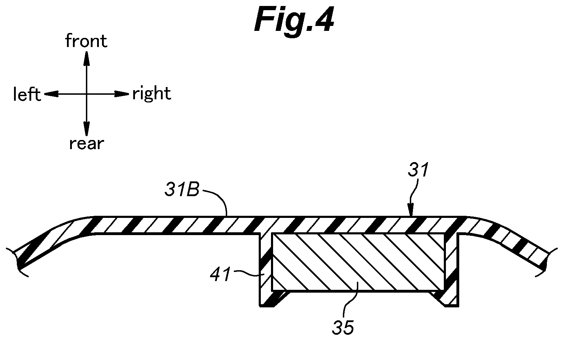

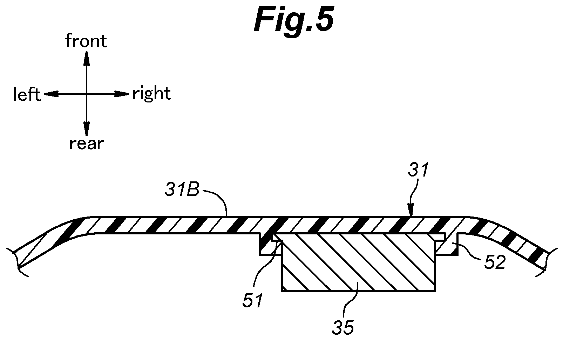

As shown in Figure 4, the reverse side of the plate rear portion 31B may be provided with multiple locking claws 41 for locking the controller 35. Also, as shown in Figure 5, mutually opposite side surfaces of the controller 35 may be provided with convex parts 51 that protrude laterally, and the reverse side of the plate rear portion 31B may be provided with multiple locking parts 52 that lock the convex parts 51. The locking parts 52 preferably extend along the reverse side of the plate rear portion 31B to define grooves for receiving the convex parts 51. Each convex part 51 is preferably inserted from the end portion of the groove formed by each locking part 52 along the reverse side of the plate rear portion 31B.

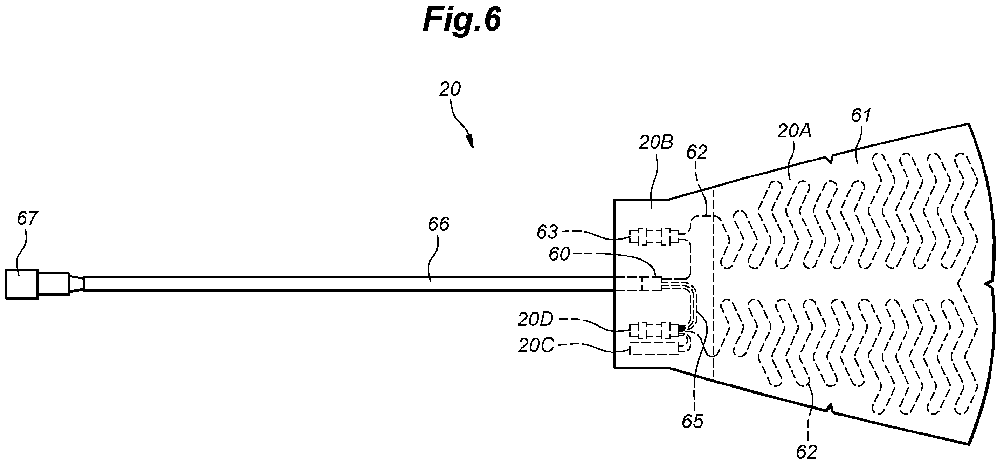

As shown in Figure 6, the heater 20 is formed in a sheet shape and is provided on an upper portion of the pad 32. The heater 20 includes a base fabric 61 and a heater wire 62, a temperature sensing element 20C, and joining parts 20D and 63 which are provided on the base fabric 61. The base fabric 61 is formed of a sheet material having flexibility, such as nonwoven fabric. The base fabric 61 is disposed on the upper portion of the pad 32 such that the surfaces thereof face upward and downward. In plan view, the base fabric 61 extends in the front-rear direction and the lateral width thereof increases toward the rear.

The heater wire 62 is an electric heating wire that generates heat upon energization, and is adhered to the upper side or the reverse side of the base fabric 61. In the present embodiment, the heater wire 62 is provided on the reverse side of the base fabric 61.

The temperature sensing element 20C is an element whose electrical resistance changes depending on the temperature, and a thermistor, a platinum resistance thermometer, or the like may be adopted. Types of thermistors include NTC thermistors, PTC thermistors, ceramic PTCs, polymer PTCs, etc.

The heater wire 62 and the temperature sensing element 20C are electrically connected to a harness 66 via multiple wirings 65. Multiple wirings 65 are connected to one end of the heater wire 62 and the temperature sensing element 20C via the joining part 20D. The joining part 20D is preferably formed of crimp terminals (crimping sleeves), for example. One wiring 65 is connected to the other end of the heater wire 62 via the joining part 63. The wirings 65 are connected to the harness 66 via a joining part 60. The joining part 60 may be a connector, for example.

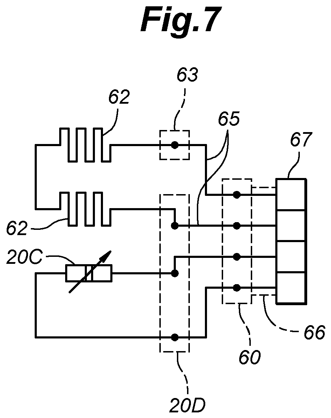

Figure 7 is an explanatory diagram of a circuit of the heater 20. As shown in Figure 7, the heater wire 62 and the temperature sensing element 20C are electrically connected to the controller 35 independently from each other via the harness 66 and a connector 67. In another embodiment, the heater wire 62 and the temperature sensing element 20C may be connected in series.

As shown in Figure 6, the temperature sensing element 20C, the multiple wirings 65, and the joining parts 20D and 63 are disposed on a front end portion of the base fabric 61. The base fabric 61 is divided into a first region 20A which is a rear-side region and a second region 20B which is a front-side region. The second region 20B occupies 30% or 25% of the front-rear length of the base fabric 61 from the front end. The ratio of the area of the second region 20B to the entire area of the base fabric 61 is preferably 25 % or less, or 20 % or less. The temperature sensing element 20C, the multiple wirings 65, and the joining parts 20D and 63 are disposed in the second region 20B of the base fabric 61. The heater wire 62 is disposed in the first region 20A.

In the second region 20B, the temperature sensing element 20C is preferably disposed adjacent to the joining part 20D. In the second region 20B, the temperature sensing element 20C and the joining part 20D are arranged in the lateral direction from the left. The temperature sensing element 20C is disposed on the outer left side of the joining part 20D. The temperature sensing element 20C, the multiple wirings 65, and the joining parts 20D and 63 are provided on the lower surface of the base fabric 61. Preferably, the temperature sensing element 20C, the multiple wirings 65, and the joining parts 20D and 63 are adhered to the lower surface of the base fabric 61.

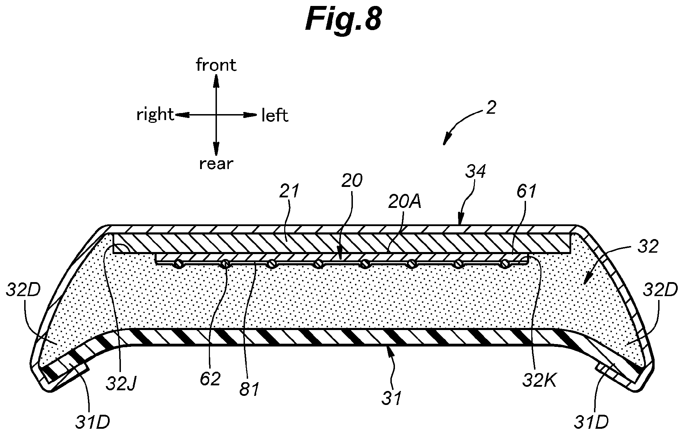

As shown in Figure 8, the heater 20 is disposed in the second recess 32K. Here, the heater wire 62, the temperature sensing element 20C, the multiple wirings 65, and the joining parts 20D and 63 may be attached to the lower surface of the base fabric 61 with double-sided tapes 81. In this case, the double-sided tapes 81 can be used to adhere the base fabric 61 to the bottom surface of the second recess 32K. Preferably, the depth of the second recess 32K is set such that the upper surface of the base fabric 61 contacts the lower surface of the plate-shaped member 21.

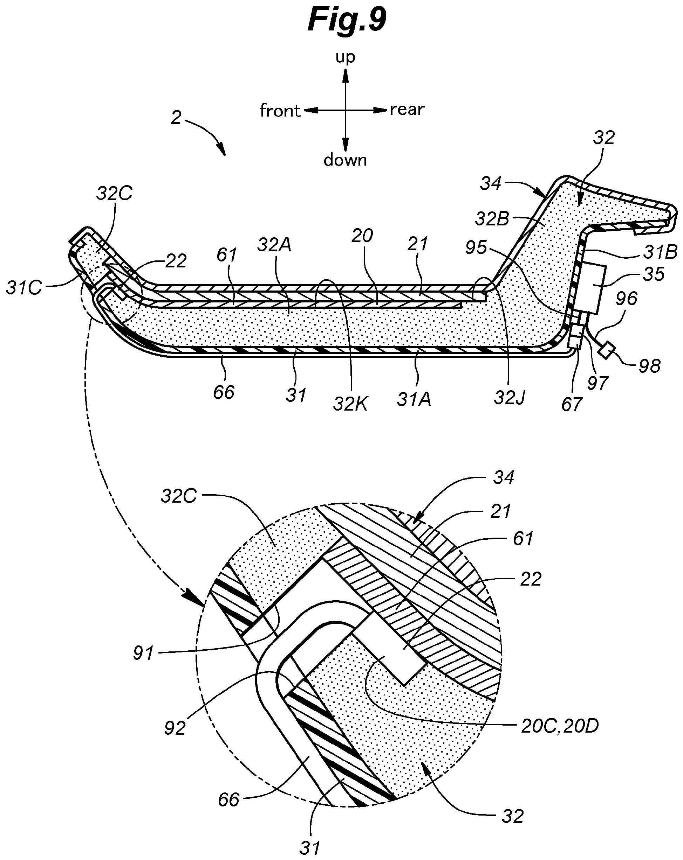

As shown in Figure 9, the second region 20B including the temperature sensing element 20C is disposed in the front end portion of the second recess 32K. Specifically, the second region 20B is disposed in the pad front wall portion 32C. Also, the rear portion of the second region 20B may be disposed in the front end portion of the pad main body 32A. The temperature sensing element 20C and the joining part 20D are disposed in the front end portion of the second recess 32K. Specifically, the temperature sensing element 20C and the joining part 20D are disposed in the pad front wall portion 32C or the front end portion of the pad main body 32A. The temperature sensing element 20C and the joining part 20D are disposed in the front portion of the pad 32. Specifically, the temperature sensing element 20C and the joining part 20D are disposed preferably within 30 % from the front end of the pad 32 in the front-rear direction, and more preferably within 25 % from the front end. Also, in plan view, the temperature sensing element 20C and the joining part 20D are preferably disposed in positions overlapping with the pad front wall portion 32C.

The harness 66 is a wire harness used for electric power supply and signal communication. As shown in Figure 9, the harness 66 passes a first through hole 91 formed in the pad 32 and a second through hole 92 formed in the bottom plate 31. The first through hole 91 extends from the bottom of the second recess 32K to the lower surface of the pad 32. The upper end of the first through hole 91 preferably opens in a front end portion of the bottom of the second recess 32K. The second through hole 92 preferably opposes the first through hole 91. The harness 66 protruding downward from the second through hole 92 preferably extends rearward along the lower surface of the bottom plate 31. The harness 66 is preferably joined to the lower surface of the bottom plate 31 by a fastener or the like.

The controller 35 includes harnesses 95, 96. The harness 95 is for connection with the heater 20 and has a connector 97 attached thereto. By plugging one of the connectors 67 and 97 into the other, the controller 35 is electrically connected to the heater 20. The harness 96 is for connection with the motorcycle body side and has a connector 98 attached thereto. By plugging one of the connector 98 and a connector on the motorcycle body side into the other, the controller 35 is connected to the motorcycle body side. With the connection with the motorcycle body side, electric power is supplied to the controller 35 from the power supply on the motorcycle body side, and the controller 35 can transmit and receive various signals to and from the motorcycle body side.

Preferably, the controller 35 determines the temperature around the temperature sensing element 20C based on the signal from the temperature sensing element 20C, and based on the determined temperature, controls the electric current or voltage supplied to the heater wire 62. Also, the temperature sensing element 20C and the heater wire 62 may be connected in series, and a constant voltage may be applied to the temperature sensing element 20C and the heater wire 62 by the controller 35. **In** this case, depending on the temperature, the electrical resistance of the temperature sensing element 20C changes and the electric current flowing through the heater wire 62 is adjusted. For example, a rise in the temperature of the temperature sensing element 20C causes the electrical resistance of the temperature sensing element 20C to increase, and the increase in the electrical resistance leads to reduction in the electric current flowing through the heater wire 62, so that the amount of heat generation from the heater wire 62 is reduced. When conducting such energization control, it is preferred to adopt a positive characteristic thermistor as the temperature sensing element 20C.

As shown in Figure 2, the plate-shaped member 21 covers the entirety of the first region 20A and the second region 20B. Thereby, the plate-shaped member 21 makes it harder for the occupant to recognize the presence of the first region 20A and the second region 20B.

A recess 22 is further provided in a position that is inside the second recess 32K and inside the pad front wall portion 32C, and the temperature sensing element 20C and the joining part 20D are received in the recess 22. This makes it harder for the occupant to recognize the presence of the temperature sensing element 20C and the joining part 20D. Also, the temperature sensing element 20C and the joining part 20D are covered by the plate-shaped member 21 received in the first recess 32J. Thereby, the temperature sensing element 20C and the joining part 20D are protected by the plate-shaped member 21, and it is harder for the occupant to recognize the temperature sensing element 20C and the joining part 20D.

The recess 22 has a first groove 22A and a second groove 22B. The first groove 22A receives the temperature sensing element 20C, and the second groove 22B receives the joining part 20D. Due to the first groove 22A and the second groove 22B, the temperature sensing element 20C and the joining part 20D are received in the recess 22 more stably.

Next, a method for manufacturing the seat 1 is described. First, the bottom plate 31, the pad 32, the heater 20, the plate-shaped member 21, and the controller 35 are prepared. Next, the pad 32 is placed on the bottom plate 31, and the heater 20 is disposed in the second recess 32K. At this time, the harness 66 of the heater 20 is passed through the first through hole 91 and the second through hole 92 and is drawn out below the bottom plate 31. Next, the plate-shaped member 21 is fitted into the first recess 32J. Next, the skin material 34 is placed to cover the pad 32, and the edge part of the skin material 34 is locked to the reverse side of the bottom plate 31. Next, the controller 35 is mounted on the reverse side of the bottom plate 31, and the harness 66 is connected to the controller 35. In this way, the seat 1 is assembled. The assembled seat 1 is mounted on the body of the motorcycle and is connected to the body of the motorcycle by using the connector 98.

In the seat 1 according to the foregoing embodiment, it is possible to dispose the temperature sensing element 20C in the vicinity of the heater wire 62 and to make it less likely for the temperature sensing element 20C to receive a load from the occupant. Since the occupant tends to be seated on the rear portion of the pad 32 which extends in the front-rear direction, the temperature sensing element 20C disposed in the front portion of the pad 32 is placed in front of the buttocks and the crotch of the occupant. Therefore, the temperature sensing element 20C is less likely to receive a load from the occupant. Particularly, by disposing the temperature sensing element 20C in the pad front wall portion 32C, it becomes even less likely for the temperature sensing element 20C to receive a load from the occupant. Also, since the contact between the occupant and the temperature sensing element 20C can be avoided, the occupant is less likely to feel uncomfortable with the temperature sensing element 20C provided in the pad 32. Since the temperature sensing element 20C is provided on the base fabric 61 together with the heater wire 62, the temperature sensing element 20C can be disposed close to the heater wire 62. Therefore, the temperature sensing element 20C can properly detect the temperature of the heater wire 62.

Because the heater 20 is disposed in the second recess 32K and is covered by the plate-shaped member 21, the temperature sensing element 20C is protected by the plate-shaped member 21, and the temperature sensing element 20C is even less likely to receive a load from the occupant.

Since the controller 35 is provided on the bottom plate 31, the seat 1 can be supplied as an assembly. Also, since the harness 66 connected to the controller 35 is passed through the first through hole 91 and the second through hole 92 formed in the pad 32 and the bottom plate 31, the harness 66 can be shortened.

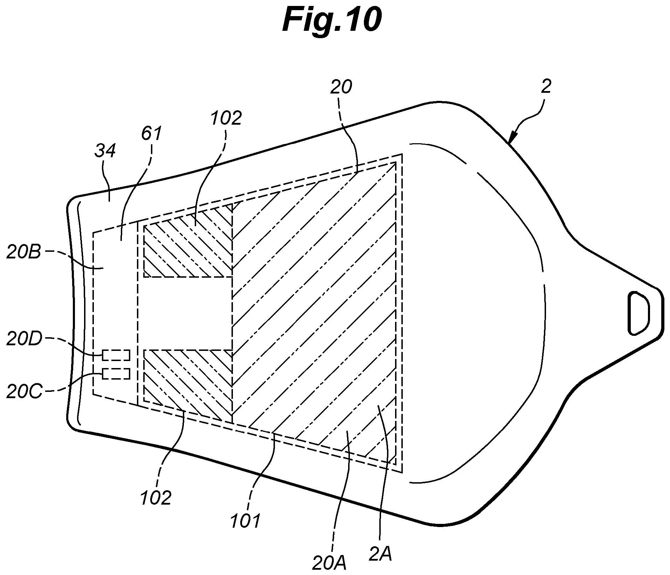

Concrete embodiments have been described in the foregoing, but the present invention can be modified in various ways without being limited to the above embodiments or modifications. For example, the distribution of the heater wire 62 on the base fabric 61 can be set arbitrarily. As shown in Figure 10, the first region 20A of the heater 20 may include a first heat generating region 101 positioned in a rear portion of the pad 32 and a second heat generating region 102 disposed in front of the first heat generating region 101. The density of the heater wire 62 in the second heat generating region 102 is lower than the density of the heater wire 62 in the first heat generating region 101. The density of the heater wire 62 indicates an area of the heater wire 62 per unit area. The higher the density of the heater wire 62 is, the greater the amount of heat that can be generated per unit area during unit time becomes. According to this aspect, the rear portion of the pad 32 where the buttocks of the occupant contact can be efficiently heated.

The second heat generating region 102 may have two parts disposed to be laterally spaced from each other. The second heat generating regions 102 that are disposed to be laterally spaced from each other can efficiently warm the left and right thighs of the occupant. The size of each of the base fabric 61, the first heat generating region 101, and the second heat generating region 102 may be changed arbitrarily.

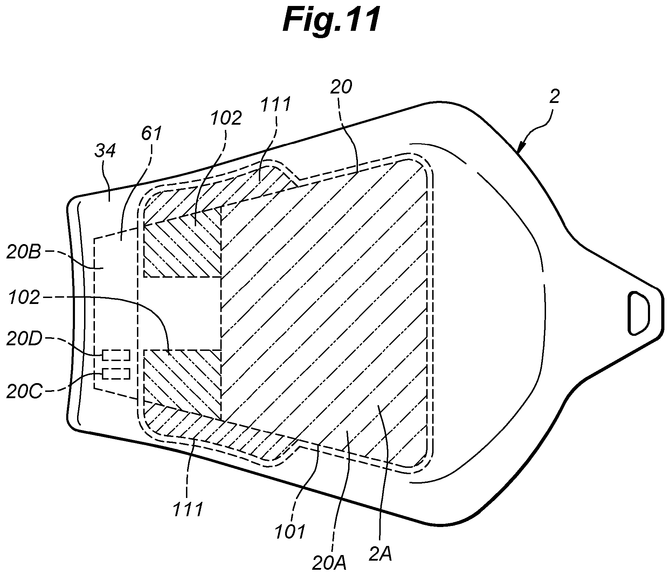

In another modification, as shown in Figure 11, the base fabric 61 may have left and right extension parts 111 that extend left and right. In plan view, the left and right extension parts 111 are preferably provided over the entirety of the second heat generating region 102 and a front portion of the first heat generating region 101. The left and right extension parts 111 preferably contact the second heat generating region 102. The shapes of the first recess 32J and the second recess 32K are preferably defined in accordance with the base fabric 61.

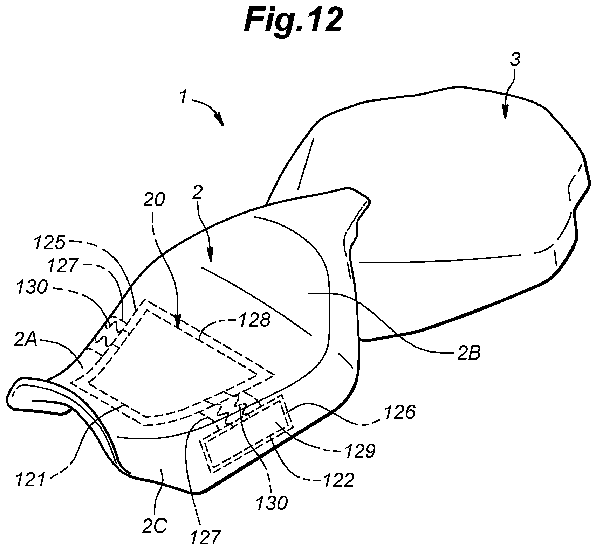

In another modification, as shown in Figure 12, the heater 20 may include a first heater part 121 disposed on the pad main body 32A of the pad 32 and left and right second heater parts 122 respectively disposed on the pad edge wall portions 32D of the pad 32. In this case, the base fabric 61 preferably includes a first base fabric part 125 configuring the first heater part 121, second base fabric parts 126 configuring the second heater parts 122, and base fabric connection parts 127 connecting the first base fabric part 125 and the second base fabric parts 126. The heater wire 62 preferably includes a first heater wire part 128 provided on the first base fabric part 125, second heater wire parts 129 provided on the second base fabric parts 126, and heater connection parts 130 provided on the base fabric connection part 127 and connecting the first heater wire part 128 and the second heater wire parts 129. Preferably, the wire length of each heater connection part 130 on the base fabric connection part 127 is longer than the length of each base fabric connection part 127 between the first heater part 121 and the second heater part 122. According to this aspect, the second heater parts 122 can efficiently warm the left and right thighs of the occupant. Further, when the pad 32 receives a load from the occupant and undergoes deformation, the heater connection parts 130 can follow the deformation of the pad 32. In the heater connection parts 130, the heater wire 62 is preferably bent in a zigzag shape or a wavy shape. The shapes of the first recess 32J and the second recess 32K are preferably defined in accordance with the base fabric 61.

### LIST OF REFERENCE NUMERALS

- 1:: seat for saddle-ride type vehicle
- 2:: front seat
- 20:: heater
- 20C:: temperature sensing element
- 20D:: joining part
- 21:: plate-shaped member
- 31:: bottom plate
- 32:: pad
- 32J:: first recess
- 32K:: second recess
- 34:: skin material
- 35:: controller
- 61:: base fabric
- 62:: heater wire
- 66:: harness
- 91:: first through hole
- 92:: second through hole
- 101:: first heat generating region
- 102:: second heat generating region
- 121:: first heater part
- 122:: second heater part
- 125:: first base fabric part
- 126:: second base fabric part
- 127:: base fabric connection part
- 128:: first heater wire part
- 129:: second heater wire part
- 130:: heater connection part

## Claims

1. A seat for a saddle-ride type vehicle, the seat comprising:
a bottom plate extending in a front-rear direction;
a pad placed on the bottom plate and extending in the front-rear direction;
a skin material covering the pad; and
a heater provided on an upper portion of the pad,
wherein the heater comprises a base fabric extending in the front-rear direction on the upper portion of the pad, a heater wire provided on the base fabric, and a temperature sensing element provided on a front portion of the base fabric, and
the temperature sensing element is disposed in a front portion of the pad.

2. The seat for a saddle-ride type vehicle according to claim 1, wherein the front portion of the pad is provided with a recess, and
the temperature sensing element is received in the recess.

3. The seat for a saddle-ride type vehicle according to claim 2, wherein the base fabric is provided with a wiring connected to the heater wire and the temperature sensing element via a joining part,
the joining part is disposed adjacent to the temperature sensing element, and
the temperature sensing element and the joining part are received in the recess.

4. The seat for a saddle-ride type vehicle according to any one of claims 1 to 3, wherein the heater comprises a first heat generating region positioned in a rear portion of the pad and a second heat generating region disposed in front of the first heat generating region, and
a density of the heater wire in the second heat generating region is lower than a density of the heater wire in the first heat generating region.

5. The seat for a saddle-ride type vehicle according to claim 4, wherein the second heat generating region has two parts disposed to be laterally spaced from each other.

6. The seat for a saddle-ride type vehicle according to any one of claims 1 to 3, wherein the pad has an upper surface and left and right side surfaces, and
the heater includes a first heater part disposed on the upper surface and second heater parts respectively disposed on the side surfaces.

7. The seat for a saddle-ride type vehicle according to claim 6, wherein the base fabric includes a first base fabric part configuring the first heater part, second base fabric parts configuring the second heater parts, and base fabric connection parts connecting the first base fabric part and the second base fabric parts,
the heater wire includes a first heater wire part provided on the first base fabric part, second heater wire parts provided on the second base fabric parts, and heater connection parts provided on the base fabric connection parts and connecting the first heater wire part and the second heater wire parts, and
a wire length of each heater connection part on the base fabric connection part is longer than a length of each base fabric connection part between the first heater part and the second heater part.

8. The seat for a saddle-ride type vehicle according to any one of claims 1 to 3, wherein the upper portion of the pad is formed with a first recess and a second recess that is recessed downward from a bottom portion of the first recess,
the heater is provided in the second recess, and
a plate-shaped member having flexibility is provided in the first recess.

9. The seat for a saddle-ride type vehicle according to any one of claims 1 to 3, wherein a controller connected to the heater wire and the temperature sensing element via a harness is provided on a reverse side of the bottom plate.

10. The seat for a saddle-ride type vehicle according to claim 9, wherein the pad and the bottom plate are each provided with a through hole for passing the harness electrically connected to the temperature sensing element and the heater wire, and
the controller is electrically connected to the harness passed through the through holes.
